# EUROPEAN PATENT APPLICATION

(11) **EP 4 546 592 A1**
(43) Date of publication of application: **30.04.2025**
(21) Application number: 23206440.2
(22) Date of filing: 27.10.2023
(51) Int. Cl.: H02J 1/08, H02H 3/087, H02J 1/06

(54) **AIRCRAFT ELECTRIC POWER SUPPLY SYSTEM AND AIRCRAFT COMPRISING AN ELECTRIC POWER SUPPLY SYSTEM**

(71) Applicant: HS Elektronik Systeme GmbH, 86720 Noerdlingen (DE)
(72) Inventor: Greither, Markus, 86154 Augsburg (DE)
(74) Representative: Schmitt-Nilson Schraud Waibel Wohlfrom Patentanwälte Partnerschaft mbB

(57) **Abstract**

An aircraft electric power supply system (2) comprises: an electric power source (4) comprising two electric output terminals (4a, 4b) for providing an electric output via said two electric output terminals (4a, 4b); a first electric power supply line (8a) for electrically coupling a first electric output terminal (4a) of the two electric output terminals (4a, 4b) to a first input of an electric load (12); a second electric power supply line (8b) for electrically coupling a second electric output terminal (4b) of the two electric output terminals (4a, 4b) to a second input of the electric load (12); a first electric power controller (14a), which is arranged in the first electric power supply line (8a); and a second electric power controller (14b), which is arranged in the second electric power supply line (8b). The first electric power controller (14a) comprises a first electric switch (16a) of a first type for selectively switching the supply of electric power via the first electric power supply line (8a), and the second electric power controller (14b) comprises a second electric switch (16b) of a second type for selectively switching the supply of electric power via the second electric power supply line (8b). The first type differs from the second type.

## Description

The present invention is related to an aircraft electric power supply system. The present invention is further related to an aircraft comprising an aircraft electric power supply system, and to a method of switching off the supply of electric power in an aircraft electric power supply system.

Modern aircraft usually comprise an electric system including at least one aircraft electric power supply system for supplying electric power from at least one electric power source to at least one electric load.

In case of a malfunction of a component of the electric system, an excessively large electric current ("overcurrent") may flow through the electric system. Such an overcurrent may cause overheating and damaging of components, including electric wires, of the electric system.

Aircraft electric power supply systems are therefore equipped with electric safety devices for switching off the supply of electric power in case of a malfunction, in particular in case of a malfunction causing an overcurrent or an overvoltage, in order to prevent further damage of components of the electric system.

The devices for switching off the supply of electric power in case of a malfunction may include electrical switches. The characteristics of the electrical switches, such as switching times and/or the electric insulation provided in a switched-off state, may be limited.

It would therefore be beneficial to provide an enhanced aircraft electric power supply system, including at least one device for switching off the supply of electric power in case of a malfunction, which has improved switching characteristics.

According to an exemplary embodiment of the invention, an aircraft electric power supply system comprises: an electric power source comprising two electric output terminals for providing an electric output via said two electric output terminals; a first electric power supply line for electrically coupling a first electric output terminal of the two electric output terminals to a first input of an electric load; a second electric power supply line for electrically coupling a second electric output terminal of the two electric output terminals to a second input of the electric load; a first electric power controller, which is arranged in the first electric power supply line; and a second electric power controller, which is arranged in the second electric power supply line. The first electric power controller comprises a first electric switch of a first type for selectively switching the supply of electric power via the first electric power supply line, and the second electric power controller comprises a second electric switch of a second type for selectively switching the supply of electric power via the second electric power supply line. The first type differs from the second type.

Exemplary embodiments of the invention also include a method of switching off a supply of electric power in an aircraft electric power supply system according to an exemplary embodiment of the invention, wherein the method includes switching off the first and second electric switches of the first and second electric power controllers of the aircraft electric power supply system. The method may in particular include switching off the first and second electric switches independently of each other.

By employing a first electric switch of a first type in the first electric power controller and employing a second electric switch of a second type in the second electric power controller, an aircraft electric power supply system according to an exemplary embodiment of the invention may provide the advantageous characteristics of an electric switch of the first type as well as the advantageous characteristics of an electric switch of the second type. The advantageous characteristics of an electric switch of the first type usually differ from the advantageous characteristics of an electric switch of the second type.

In other words, employing two different types of switches for the first and second electric switches allows benefiting from different advantageous characteristics, which are provided by each of said two types of switches, respectively.

As a result, an enhanced aircraft electric power supply system showing improved switching characteristics may be provided. In consequence, the safety of the aircraft electric power supply system as well as the safety of an aircraft comprising an aircraft electric power supply system according to an exemplary embodiment of the invention may be enhanced.

Particular embodiments may further include any of the following optional features, alone or in combination:
The first electric switch of the first type may switch faster than the second electric switch of the second type. In other words, the switching time of the first electric switch of the first type may be shorter than the switching time of the second electric switch of the second type. A short switching time allows for a faster interruption of an electric current flowing through the aircraft electric power supply system by switching off the first electric switch.

One of the electric switches may be a solid state switch. One of the electric switches may in particular be a solid state power controller (SSPC) comprising at least one MOSFET or another type of power semiconductor switching device. Solid state switches typically allow for fast switching and they typically have a longer lifetime than mechanical switches. Solid state switches may further allow for switching large currents and high voltages. Solid state switches may also be less vulnerable to adverse external influences, such as accelerations and vibrations.

The solid state switch may be used as a "normal switch", which is selectively switched on and off in normal operation; and the mechanical switch may provide a backup switch, which may be used for interrupting the supply of electric power in case of a malfunction of the solid state switch.

One of the electric switches may be a mechanical switch, in particular a relay. A mechanical switch typically allows for reliably interrupting the flow of electric current though the mechanical switch. Mechanical switches may in particular allow galvanically separating the output side of the switch from the input side of the switch providing a very efficient insulation.

The first electric switch of the first type may be a solid state switch, and the second electric switch of the second type may be a mechanical switch, or vice versa.

The aircraft electric power supply system may comprise a safety controller, which is configured for controlling the operation of the first and second electric switches.

The aircraft electric power supply system may further comprise an overcurrent detector for detecting an overcurrent in at least one of the first and second electric power supply lines. The safety controller may be configured for driving at least one of the first and second electric switches to switch off, in case an overcurrent is detected by an overcurrent detector in at least one of the first and second electric power supply lines. Such a configuration allows reliably interrupting the flow of electric currents through the aircraft electric power supply system in case of over-currents occurring in the aircraft electric power supply system.

A method of switching off a supply of electric power from an aircraft electric power supply system may include monitoring an electric current flowing through at least one of the first and second electric power supply lines and switching of the first and second electric switches when the electric current flowing through at least one of the first and second electric power supply lines exceeds a predefined current limit. The predefined current limit may be in the range of 10 A to 10 000 A

As a result, the safety of the aircraft electric power supply system may be enhanced.

The aircraft electric power supply system may further comprise at least one overvoltage detector for detecting an overvoltage at at least one of the first and second electric output terminals of the electric power source. The safety controller may be configured for driving at least one of the first and second electric switches to switch off, in case an overvoltage is detected by an overvoltage detector at at least one of the first and second electric output terminals of the electric power source.

A method of switching off a supply of electric power from an aircraft electric power supply system may include monitoring an electric voltage supplied at at least one of the two electric output terminals of the electric power source and switching off the first and second electric switches when the voltage supplied at at least one of the two electric output terminals exceeds a predefined voltage limit. The predefined voltage limit may be in the range of 10 V to 10 000 V.

Such a configuration allows reliably interrupting the flow of electric currents through the aircraft electric power supply system in case of an overvoltage occurs in the aircraft electric power supply system. As a result, the safety of the aircraft electric power supply system may be enhanced.

The electric power source may be a floating electric power source providing an electric power output that is symmetric with respect to a common ground. In other words, the electric power source may be configured for providing a first voltage Uₐ with respect to a common ground at the first output terminal, and the electric power source may be configured for providing a second voltage U_{b} with respect to the common ground at the second output terminal. The first voltage Uₐ and the second voltage U_{b} may have the same absolute value but a different polarity (Uₐ = - U_{b}) with respect to the common ground.

The electric power source may comprise two balance resistors, which are electrically connected in a series connection between the first electric output terminal and the second electric output terminal. The common ground may be coupled to a point at which the two balance resistors are electrically connected with each other.

The electric power source may be a DC electric power source providing a DC electric output. Alternatively, the electric power source may be an AC electric power source providing an AC electric output.

The electric power source may provide a low voltage electric output having a voltage in the range of 20 V to 30 V, in particular a DC output voltage of 28 V. Voltages in the range of 20 V to 30 V, in particular a voltage of 28 V nominal, are often used for operating electric loads in an aircraft.

Alternatively, the electric power source may provide a high voltage electric output having a voltage in the range of 250 V to 800 V. The electric power source may in particular provide an electric output having a voltage of 270 V, an electric output having a voltage of 540 V, or an electric output having a voltage of 800 V. The electric power source may in particular provide a high voltage DC output.

The first electric power controller may further comprise a first current limiting element for limiting an electric current flowing through the first electric power supply line. Alternatively or additionally, the second electric power controller may comprise a second current limiting element for limiting an electric current flowing through the second electric power supply line. First and second current limiting elements provided in the first and second electric power controllers, respectively, add an additional safety net for switching off the supply of electric power in case of a malfunction, in particular if switching off the first and second electric switches should fail. In consequence the safety of the aircraft electric power supply system may be enhanced even further by providing first and second current limiting elements.

The first and second current limiting elements may be of two different types of current limiting elements. The different types of current limiting elements may in particular have different characteristics.

At least one of the current limiting elements may be a fuse, in particular a pyro-fuse.

At least one of the current limiting elements may in particular be a resetable fuse, which may be reset into a normal operation mode allowing electric current to pass through, after it has been triggered for interrupting the flow of an electric current through the respective electric power controller and after the overcurrent situation, which triggered the resetable fuse, has been remedied. Contrary to a conventional fuse, a resetable fuse does not need to be replaced after an overcurrent situation triggering the fuse has occurred. As a result, the aircraft electric power supply system may be reset into normal operation faster and more conveniently after an overcurrent situation.

Methods of switching off a supply of electric power from an aircraft electric power supply system according to an exemplary embodiment of the invention may include driving the first and second electric switches simultaneously and/or synchronously.

In an alternative embodiment, the method may include driving the first and second electric switches serially, i.e. one after the other. The method may include a delay between driving the first and second electric switches.

Exemplary embodiments of the invention further include an aircraft, such as an airplane or a helicopter, which is equipped with an aircraft electric power supply system according to an exemplary embodiment of the invention. The additional features, modifications and effects, as described above with respect to an aircraft electric power supply system and/or with respect to a method of switching off a supply of electric power from an aircraft electric power supply system, apply to such an aircraft in an analogous manner.

In the following, an exemplary embodiment of an aircraft ground fault detection circuit will be described is described in more detail with reference to the enclosed figures.

Figure 1 depicts a schematic side view of an aircraft comprising an aircraft electric power supply system including an aircraft electric power supply system according to an exemplary embodiment of the invention.

Figure 2 depicts a schematic view of an aircraft electric power supply system according to an exemplary embodiment of the invention.

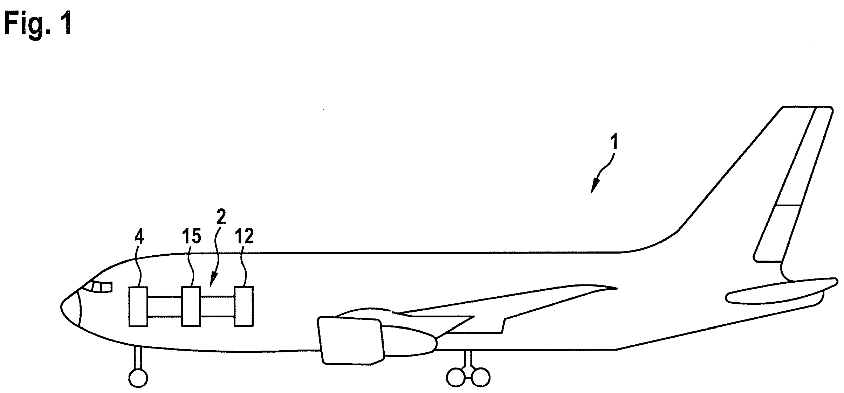

Figure 1 shows a schematic view of an aircraft 1, in particular of an airplane, which is equipped with an aircraft electric power supply system 2 including an aircraft electric power source 4, an electric load 12, and an electric safety circuit 15. The electric safety circuit 15 is configured for controlling the supply of electric power from the aircraft electric power supply 24 to the electric load 26.

Although the aircraft electric power supply system 2, as it is depicted in Figure 1, includes only a single aircraft electric power source 4, a single electric load 12, and a single electric safety circuit 15, respectively, it is to be understood that this is for purpose of illustration only. In practice, embodiments of an aircraft electric power supply system 2 may comprise more the one of each of said components, respectively. Typically, embodiments of an aircraft power supply system 2 may include at least numerous electric safety circuits 15 and numerous loads 12.

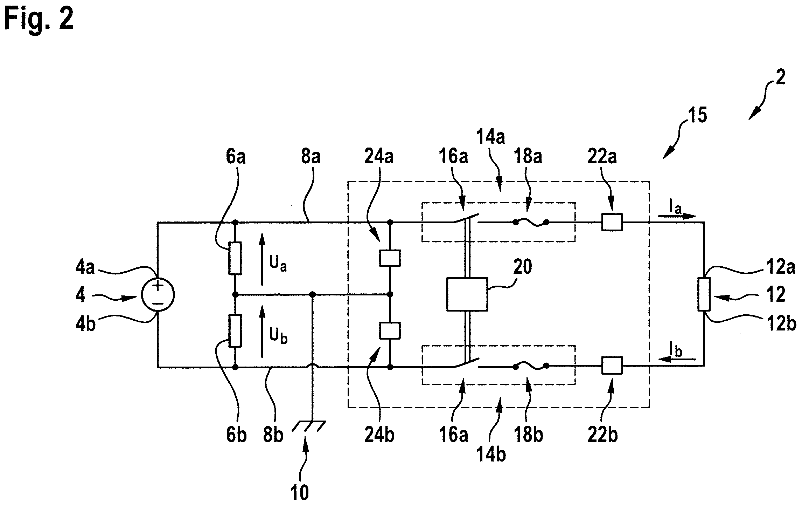

Figure 2 depicts a schematic view of an aircraft electric power supply system 2 according to an exemplary embodiment of the invention.

The aircraft electric power supply system 2 comprises an electric power source 4 with two electric output terminals 4a, 4b for providing an electric output at said two electric output terminals 4a, 4b.

The electric power source 4 may be a DC electric power source 4, providing a DC electric output, as it is depicted in Figure 2. Alternatively, the electric power source 4 may be an AC electric power source 4, providing an AC electric output at its electric output terminals 4a, 4b.

A first electric power supply line 8a couples the first electric output terminal 4a of the electric power source 4 electrically to a first input 12a of an electric load 12.

A second electric power supply line 8b couples the second electric output terminal 4b of the electric power source 4 electrically to a second input 12b of an electric load 12.

The electric power source 4 may be configured as a symmetric electric power source 4 with respect to a common ground 10. The common ground 10 may, for example, be provided by a chassis of the aircraft 1.

A first balance resistor 6a may be connected between the first electric power supply line 8a and the common ground 10, and a second balance resistor 6b may be connected between the second electric power supply line 8b and the common ground 10.

The first and second balance resistors 6a, 6b may have a resistance in the range of 100 kΩ to .100 MΩ, respectively.

As a result, in case the electric power source 4 is a DC electric power source 4, as it is depicted in Figure 1, a first voltage Uₐ is provided between the first electric power supply line 8a, and a second voltage U_{b} is provided between the second electric power supply line 8b and the common ground 10. Typically, the first and second balance resistors 6a, 6b have the same resistance, so that the first voltage Uₐ and the second voltage U_{b} have the same absolute values: |Uₐ| = |U_{b}|, but differ in polarity.

Providing the electric power source 4 with first and second balance resistors 6a, 6b for providing a symmetric electric power source 4 with respect to a common ground 10 is, however, only an optional implementation, but it is not mandatory for implementing an aircraft electric power supply system according to an exemplary embodiment of the invention.

An electric safety circuit 15, which is configured for monitoring and controlling the supply of electric power from the electric power source 4 to the electric load 12, is arranged between the electric power source 4 and the electric load 12.

The electric safety circuit 15 comprises a first electric power controller 14a, which is arranged in the first electric power supply line 8a, and a second electric power controller 14b, which is arranged in the second electric power supply line 8b.

The first electric power controller 14a comprises a first electric switch 16a, which is arranged in the first electric power supply line 8a for selectively switching the supply of electric power, which is supplied from the electric power source 4 via the first electric power supply line 8a to the electric load 12.

The second electric power controller 14b comprises a second electric switch 16b, which is arranged in the second electric power supply line 8b for selectively switching the supply of electric power, which is supplied from the electric power source 4 via the second electric power supply line 8b to the electric load 12.

According to an exemplary embodiment of the invention, the first electric switch 16a of the first electric power controller 14a is of a first type, and the second electric switch 16a of the second electric power controller 14b is of a second type, which differs from the first type.

The first and second electric switches 16a, 16b being different types of switches may include that different physical and/or electrical principles are used for providing the switching functionalities of the first and second electric switches 16a, 16b.

One of the electric switches 16a, 16b may, for example, be a solid state switch, in particular a solid state power controller (SSPC), comprising MOSFET's and/or other power semiconductor devices providing a solid state switch 16a, 16b of the first type.

The other one of the electric switches 16a, 16b may, for example, be a mechanical switch, in particular a relay, comprising at least one movable electric contact and a driving mechanism, for example a driving mechanism comprising a solenoid, for selectively moving the at least one movable electric contact between a closed state, which allows an electric current to flow through the respective electric switch 16a, 16b, and an open state, in which the flow of electric current through the respective electric switch 16, 16b is interrupted.

Since the first and second electric switches 16a, 16b are of different types, the first and second electric switches 16a, 16b may have different properties, in particular different switching properties.

For example, an electric switch 16a of the first type may switch faster between its switched-on state and its switch-off state, than an electric switch 16b of the second type.

Alternatively or additionally, in the switch-off state, an electric switch 16b of the second type may have better insulating properties than an electric switch 16a of the first type.

Employing two different types of switches for the first and second electric switches 16a, 16b according to exemplary embodiments of the invention allows benefiting from different advantages that may be associated with each of said two types of switches, respectively.

For example, the first electric switch 16a may be of a first type, which is able to switch very fast into its switched-off state in order to allow interrupting an electric current flowing through the first electric power supply line 8a very fast by switching off the first electric switch 16a.

The second electric switch 16b may be of a second type, which is able to interrup an electric current flowing through the second electric power supply line 8b very reliably, in particular more reliably than an electric switch 16a of the first type. In other words, the electric insulation, which is provided by an electric switch 16b of the second type, when it is switched into its switched-off state, may be very high, the electric insulation may in particular by higher that the electric insulating provided by an electric switch 16a of the first type, when it is switched into its switched-off state.

The second electric switch 16b may in particular have a high proof voltage, preventing penetration, and it may be highly resistant against electromagnetic disturbances.

By employing a first electric switch 16a of a first type in the first electric power controller 14a and by employing a second electric switch 16b of a second type in the second electric power controller 14b, the electric safety circuit 15 may provide both, the fast switching capabilities of the first electric switch 16a of the first type, and the high electric insulation provided by the second electric switch 16b of the second type.

Alternatively or additionally, the second electric switch 16b of the second type may have a better operational reliability than the first electric switch 16a of the first type.

The electric safety circuit 15 may further comprise a safety controller 20.

The safety controller 20 may be coupled to at least one overcurrent detector 22a, 22b, which is configured for monitoring an electric current Iₐ, I_{b} flowing through at least one of the first and second electric power supply lines 8a, 8b. In such a configuration, the safety controller 20 may be configured for driving the first and second electric switches 16a, 16b to switch off, in case the detected electric current Iₐ, I_{b} flowing through at least one of the first and second electric power supply lines 8a, 8b exceeds a predefined current limit Iₗᵢₘᵢₜ.

Alternatively or additionally, the safety controller 20 may be coupled to at least one overvoltage detector 24a, 24b, which is configured for monitoring at least one electric voltage Uₐ, U_{b}, which is supplied by the electric power source 4. In such a configuration, the safety controller 20 may be configured for driving the first and second electric switches 16a, 16b to switch off, in case at least one electric voltage Uₐ, U_{b}, detected by at least one overvoltage detector 24a, 24b, exceeds a predefined voltage limit Uₗᵢₘᵢₜ.

The safety controller 20 may be configured for driving the first and second electric switches 16a, 16b simultaneously / synchronously. Alternatively, the safety controller 20 may be configured for driving the first and second electric switches 16a, 16b serially, i.e. one after the other, in particular with an optional delay.

An electric safety circuit 15 comprising a safety controller 20 allows for reliably shutting off the supply of electric power from the electric power source to the electric load in case of an overcurrent and/or an overvoltage occur in the aircraft electric power supply system 2. As a result, the safety of the aircraft electric power supply system 2 may be enhanced.

In order to enhance the safety of the aircraft electric power supply system 2 even further, each of the first and second electric power controllers 14a, 14b may comprise an additional current limiting element 18a, 18b, which is configured for limiting the electric current Iₐ, I_{b} flowing through the respective power controller 14a, 14b independently of the first and second electric switches 16a, 16b.

The first and second current limiting elements 18a, 18b may in particular be configured for interrupting the flow of an electric current flowing through the respective electric power controller 14a, 14b in case of an overcurrent in a situation in which at least one of the safety controller 20 and the respective electric switches 16a, 16b fails to switch-off the electric current Iₐ, I_{b}, for example due to a failure of at least one of the safety controller 20, the respective electric switch 16a, 16b and/or the respective overcurrent detector 22a, 22b.

The first current limiting element 18a provided in the first electric power controller 14a and the second current limiting element 18b provided in the second electric power controller 14b may be of the same type. Alternatively, the first current limiting element 18a and the second current limiting element 18b may be of different types.

Each of the current limiting elements 18a, 18b may, for example, be a fuse, in particular a fuse that melts in case of an overcurrent, or a pyro-fuse. At least one of the current limiting elements 18a, 18b may be a resetable fuse, which may be reset into a normal operation mode allowing electric current to pass through, after it has been triggered for interrupting the flow of an electric current through the respective electric power controller 14a, 14b and after the overcurrent situation, which triggered the resetable fuse, has been remedied.

While the invention has been described with reference to an exemplary embodiment, it will be understood by those skilled in the art that various changes may be made and equivalents may be substituted for elements thereof without departing from the scope of the invention. In addition, modifications may be made to adapt a particular situation or material to the teachings of the invention without departing from the essential scope thereof. Therefore, it is intended that the invention is not limited to the particular embodiment disclosed, but that the invention will include all embodiments falling within the scope of the appended claims.

## Claims

1. Aircraft electric power supply system (2) comprising:
an electric power source (4) comprising two electric output terminals (4a, 4b) for providing an electric output via said two electric output terminals (4a, 4b);
a first electric power supply line (8a) for electrically coupling a first electric output terminal (4a) of the two electric output terminals (4a, 4b) to a first input of an electric load (12);
a second electric power supply line (8b) for electrically coupling a second electric output terminal (4b) of the two electric output terminals (4a, 4b) to a second input of the electric load (12);
a first electric power controller (14a), which is arranged in the first electric power supply line (8a); and
a second electric power controller (14b), which is arranged in the second electric power supply line (8b);
wherein the first electric power controller (14a) comprises a first electric switch (16a) of a first type for selectively switching the supply of electric power via the first electric power supply line (8a);
wherein the second electric power controller (14b) comprises a second electric switch (16b) of a second type for selectively switching the supply of electric power via the second electric power supply line (8b); and
wherein the first type differs from the second type.

2. Aircraft electric power supply system (2) according to claim 1, wherein the first electric switch (16a) of the first type is able to switch faster than the second electric switch (16b) of the second type.

3. Aircraft electric power supply system (2) according to claim 1 or 2, wherein one of the first and second electric switches (16a, 16b) is a solid state switch, and/or wherein one of the first and second electric switches (16a, 16b) is a mechanical switch, such as a relay.

4. Aircraft electric power supply system (2) according to any of the preceding claims, further comprising a safety controller (20), which is configured for controlling the first and second electric switches (16a, 16b).

5. Aircraft electric power supply system (2) according to claim 4, further comprising at least one overcurrent detector (22a, 22b) for detecting an overcurrent in at least one of the first and second electric power supply lines (8a, 8b) (8a, 8b); wherein the safety controller (20) is configured for driving at least one of the first and second electric switches (16a, 16b) to switch off, in case an overcurrent is detected in at least one of the first and second electric power supply lines (8a, 8b) (8a, 8b).

6. Aircraft electric power supply system (2) according to claim 4 or 5, further comprising at least one overvoltage detector (24a, 24b) for detecting an overvoltage at the two electric output terminals (4a, 4b) of the electric power source (4); wherein the safety controller (20) is configured for driving at least one of the first and second electric switches (16a, 16b) to switch off, in case an overvoltage is detected.

7. Aircraft electric power supply system (2) according to any of the preceding claims, wherein the electric power source (4) is a floating electric power source (4) providing an electric power output that is symmetric with respect to a common ground (10).

8. Aircraft electric power supply system (2) according to any of the preceding claims, wherein the electric power source (4) is a DC electric power source (4), or wherein the electric power source (4) is an AC electric power source (4).

9. Aircraft electric power supply system (2) according to any of the preceding claims, wherein the first electric power controller (14a) comprises a first current limiting element (18a) for limiting an electric current (Iₐ) flowing through the first electric power supply line (8a); and/or wherein the second electric power controller (14b) comprises a second current limiting element (18b) for limiting an electric current (I_{b}) flowing through the second electric power supply line (8b).

10. Aircraft electric power supply system (2) according to claim 9, wherein the first and second current limiting elements (18a, 18b) are of different types of current limiting elements.

11. Aircraft electric power supply system (2) according to claim 9 or 10, wherein at least one of the current limiting elements (18a, 18b) is a fuse, in particular a pyro-fuse.

12. Aircraft (1) comprising an aircraft electric power supply system (2) according to any of the preceding claims.

13. Method of switching off a supply of electric power in an aircraft electric power supply system (2) according to any of claims 1 to 11 to an electric load (12); wherein the method includes switching off the first and second electric switches (16a, 16b); wherein the method in particular includes switching off the first and second electric switches (16a, 16b) independently of each other.

14. Method according to claim 13, wherein the method includes monitoring an electric current (Iₐ, I_{b}) flowing through at least one of the first and second electric power supply lines (8a, 8b) and switching of the first and second electric switches (16a, 16b) when the electric current (Iₐ, I_{b}) flowing through at least one of the first and second electric power supply lines (8a, 8b) exceeds a predefined current limit (Iₗᵢₘᵢₜ).

15. Method according to claim 13 or 14, wherein the method includes monitoring an electric voltage (Uₐ, U_{b}) supplied at at least one of the two electric output terminals (4a, 4b) of the electric power source (4) and switching off the first and second electric switches (16a, 16b) when the voltage (Uₐ, U_{b}) supplied at at least one of the two electric output terminals (4a, 4b) exceeds a predefined voltage limit (Uₗᵢₘᵢₜ).
